Europäisches Patentamt

European Patent Office

Office européen des brevets

(19)

(11) **EP 0 806 687 A1**

(12) # DEMANDE DE BREVET EUROPEEN

(43) Date de publication:
**12.11.1997 Bulletin 1997/46**

(51) Int Cl.⁶: **G02B 6/36**, G02B 6/28,
G01H 9/00, G01P 15/08

(21) Numéro de dépôt: **97401032.4**

(22) Date de dépôt: **07.05.1997**

(84) Etats contractants désignés:
**DE ES GB IT**

(30) Priorité: **10.05.1996 FR 9605842**

(71) Demandeur: **COMMISSARIAT A L'ENERGIE ATOMIQUE**
**75015 Paris (FR)**

(72) Inventeurs:
- **Labeye, Pierre**
  **38100 Grenoble (FR)**
- **Revol-Cavalier, Frédéric**
  **38000 Grenoble (FR)**

(74) Mandataire: **Moutard, Pascal Jean**
**c/o Brevatome,**
**25, rue de Ponthieu**
**75008 Paris (FR)**

(54) **Dispositif optomécanique et application à des capteurs en optique intégrée**

(57) L'invention a pour objet un dispositif optomécanique comportant :

- une partie fixe (10, 12), et
- une partie mobile (28) comportant elle-même une structure optique guidante (34), une première extrémité (30), dite fixe, rattachée à la partie fixe, une seconde extrémité (32), dite mobile, ladite partie mobile pouvant se déplacer suivant une première direction (y),
- la partie fixe comportant N (N≥2) moyens de collection de la lumière (20, 22), et un coupleur multimode (24, 25) situé en regard de la structure optique guidante (34) de la partie mobile, et permettant de transmettre un signal optique issu de cette dernière vers les N moyens de collection de la lumière.

L'invention concerne également un capteur contenant un tel dispositif optomécanique.

FIG. 2

EP 0 806 687 A1

**Description**

Domaine technique et art antérieur

L'invention concerne le domaine de l'optomécanique. En particulier, l'invention relève des dispositifs associant des guides optiques intégrés à une structure mécanique gravée dans le même matériau. Ces dispositifs sont particulièrement intéressant dans le domaine de la métrologie.

L'optomécanique résulte d'une démarche récente dans le domaine, plus vaste, des microtechnologies, même si les domaines de l'optique intégrée et de la micromécanique, pris séparément, sont bien développés.

Dans le domaine des capteurs optomécaniques, on utilise le déplacement mécanique de l'extrémité d'un guide optique en regard de l'extrémité d'un ou de plusieurs guides optiques fixes. C'est le phénomène physique à mesurer (accélération, vibrations, etc..) qui provoque ce déplacement de l'extrémité du guide.

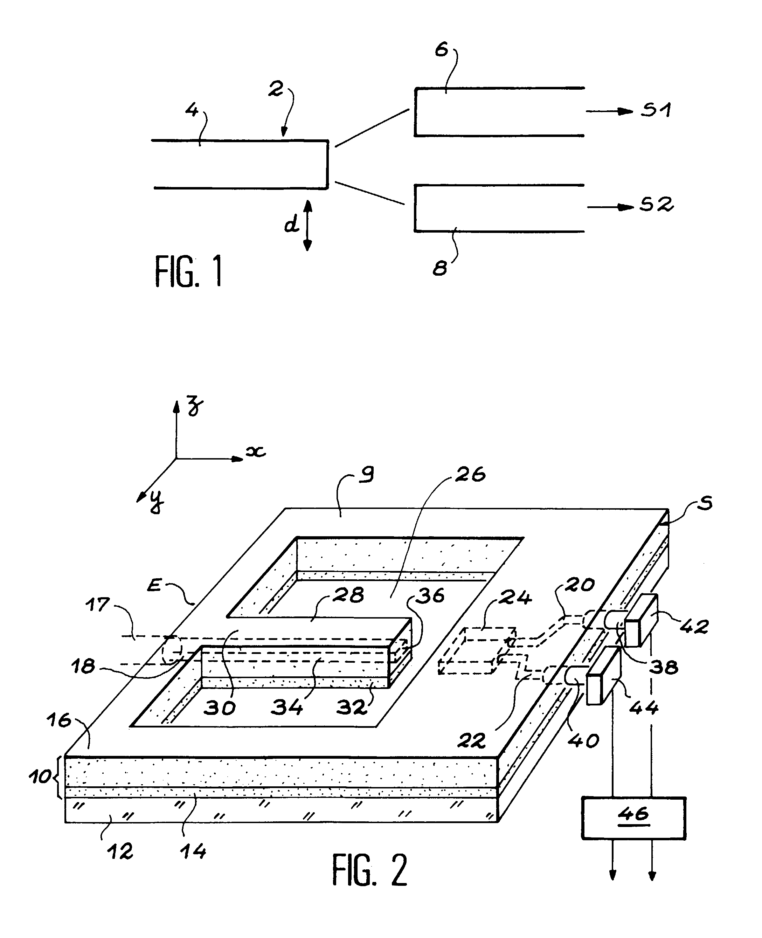

Dans le domaine des fibres optiques, une configuration très simple pour mesurer ce déplacement d consiste à positionner, comme illustré sur la figure 1, une fibre optique 2, ayant une extrémité 4 libre, en face de deux fibres optiques 6, 8 mises côte à côte.

Chacune de ces fibres transmet un signal $S_1$, $S_2$.

Dans cette configuration, on obtient un signal proportionnel à l'accélération subie par le capteur en effectuant (électroniquement) la différence $S_1$-$S_2$ des deux signaux optiques issus des deux fibres de sortie.

Ce dispositif est simple, mais pose certains problèmes.

Lorsqu'une masse mobile est soumise à une accélération statique "A", le déplacement "X" d'une masse induit par cette accélération "A" est donné par la relation très simple suivante :

$$X = \frac{A}{(2\pi f_O)^2}$$

où $f_o$ est la fréquence de résonance naturelle de cette masse. Lorsque la masse mobile est soumise à une vibration, le déplacement est aussi donné par cette formule pour des fréquences très inférieures à cette fréquence $f_o$. Le déplacement est beaucoup plus faible pour des fréquences supérieures à cette fréquence $f_o$. Ceci veut dire que, si on veut un capteur très sensible, c'est-à-dire une masse sismique ayant un grand déplacement pour une faible accélération, la fréquence de résonance doit être très basse. Il est alors impossible de mesurer des vibrations à des fréquences élevées. Inversement, lorsque l'on veut mesurer des vibrations à des fréquences élevées, il est nécessaire d'avoir une fréquence de résonance très haute, et le capteur est donc très peu sensible. Afin d'avoir un capteur sensible à des fréquences élevées, il est donc nécessaire de détecter des déplacements extrêmement faibles de cette masse mobile.

Le dispositif décrit ci-dessus, en liaison avec la figure 1, nécessite de grands déplacements de l'extrémité libre de la fibre optique. En effet, le diamètre des fibres optiques étant de l'ordre de 125 μm, la distance minimum entre les deux coeurs des fibres optiques 6, 8 de sortie est de 125 μm. Le dispositif n'est donc sensible que pour des déplacements assez importants de l'extrémité libre 4 de la fibre optique 2, et est donc limité aux basses fréquences.

Ce dispositif présente une sensibilité limitée par le diamètre assez important des fibres, qui rend impossible le rapprochement des deux fibres de sortie pour obtenir une meilleure sensibilité. Par ailleurs, ce dispositif est très délicat à réaliser car ses performances sont fortement dépendantes du bon positionnement des trois fibres.

Il est possible de réaliser ce type de capteur en micro-optomécanique intégrée. Le capteur fonctionne toujours sur le même principe. La sensibilité est améliorée par le fait qu'il est possible de rapprocher les deux guides de sortie fixes. Plus précisément, les guides étant réalisés par dépôt et gravure de couches sur un substrat, il est possible de réaliser deux guides de sortie fixes beaucoup plus près l'un de l'autre, de plus parfaitement alignés par rapport au guide mobile. On obtient ainsi un capteur plus sensible ou pouvant mesurer des fréquences plus élevées.

Cependant, cette configuration pose aussi un problème. En effet, les deux guides optiques de sortie ne peuvent pas être trop proches l'un de l'autre car, dans ce cas, ils échangeraient entre eux de l'énergie lumineuse, et la différence des signaux de sortie ne serait alors plus proportionnelle à l'accélération. La sensibilité du capteur est donc, là encore, limitée.

Exposé de l'invention

L'invention propose un dispositif optomécanique dont la structure permet d'améliorer la sensibilité par rapport aux dispositifs connus.

Plus précisément, l'invention a pour objet un dispositif optomécanique comportant :

- une partie fixe, et

2

- une partie mobile, comportant une structure optique guidante, une première extrémité, dite fixe, rattachée à la partie fixe, une seconde extrémité, dite mobile, ladite partie mobile pouvant se déplacer suivant une première direction,
- la partie fixe comportant N moyens de collection de la lumière, ainsi qu'un coupleur multimode, situé en regard de la structure optique guidante de la partie mobile, et permettant de transmettre un signal optique issu de cette dernière vers les N moyens de collection de la lumière.

Ce dispositif évite les problèmes liés au couplage entre guides de sortie voisins.

Par rapport à un dispositif ayant, par ailleurs, les mêmes caractéristiques pour la partie mobile, et donc la même fréquence de résonance, la présence d'un coupleur multimode permet, dans un dispositif selon l'invention, d'obtenir une meilleure sensibilité à une même accélération. Le dispositif selon l'invention est donc plus sensible à des fréquences de vibration élevées.

Le coupleur multimode peut être un guide d'onde multimode, ou un ensemble de guides monomodes répartis de façon à pouvoir échanger de l'énergie, apte, lorsque la répartition du faisceau lumineux qui est dirigé à l'entrée du coupleur comporte un seul maximum, à transformer cette répartition en une répartition à N (N≥2) maxima en sortie du coupleur.

Les N moyens de collection disposés à la sortie du coupleur peuvent être formés par des guides optiques ou des fibres optiques ou encore des détecteurs, ils peuvent également être formés par une combinaison de deux ou trois de ces moyens.

Dans le cas de N détecteurs délivrant chacun un signal Si (i=1, ..., N), des moyens peuvent en outre être prévus pour délivrer un signal représentatif d'une combinaison des signaux Si, et par exemple un signal représentatif de la quantité $\Sigma\lambda_i S_i$, où $\lambda_i$ est un coefficient de pondération du signal Si. Une combinaison intéressante, pour N=2 est le signal proportionnel à la différence $S_1 - S_2$, qui est quasiment linéaire pour des déplacements assez faibles.

En outre, pour N=2 les moyens de traitement du signal peuvent être prévus pour délivrer un signal représentatif de la quantité $S_1 - S_2 / S_1 + S_2$ : on obtient alors un signal quasiment linéaire sur une plus grande plage de déplacements du guide mobile.

Dans le cas où les moyens de collection sont N guides optiques, des fibres optiques peuvent être prévues, dans le prolongement de ces guides optiques de sortie. Afin d'éliminer de la lumière parasite, des réflecteurs peuvent être disposés devant l'entrée de l'une des fibres. De plus, les fibres peuvent être insérées dans des trous pratiqués dans la partie fixe, ces trous étant élargis en au moins un endroit. Ces élargissements facilitent l'apport de colle optique pour le maintien des fibres.

Par ailleurs, la lumière peut être amenée dans la partie mobile par l'intermédiaire d'une fibre optique d'entrée et d'un guide optique d'entrée. Dans ces conditions, le dispositif peut comporter également des réflecteurs en sortie de la fibre optique d'entrée, de part et d'autre du guide optique d'entrée.

Afin d'obtenir des déplacements plus importants de la partie mobile, celle-ci peut être lestée, en particulier à son extrémité mobile.

Pour résoudre les problèmes de déviation de cette même partie mobile suivant une seconde direction, des moyens de compensation des déformations de cette partie peuvent être prévus. Ces moyens peuvent comporter par exemple au moins un bras de compensation, ces bras présentant une souplesse suffisante selon la première direction (pour ne pas entraver le déplacement selon cette direction) et une rigidité suffisante suivant la deuxième direction (pour limiter les déformations suivant cette deuxième direction). Diverses formes de bras peuvent ainsi être envisagées (en "U", en équerre, de forme droite).

L'invention a également pour objet un capteur optomécanique comportant un dispositif tel que décrit ci-dessus.

L'invention s'applique également à la réalisation d'un commutateur optique. Pour cela, on rajoute des moyens de commande électrique ou électromagnétique à la partie mobile, comme décrit dans le document FR-2 660 444.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1, déjà décrite, représente un schéma de fonctionnement d'un dispositif selon l'art antérieur,
- la figure 2 représente un mode de réalisation d'un dispositif selon l'invention,
- les figures 3 et 4 représentent des coupleurs optiques multimodes,
- les figures 5A, 5B et 5C représentent respectivement la répartition des intensités en entrée et en sortie du coupleur ou guide multimode, la répartition détaillée d'intensité en sortie, pour un faisceau correctement positionné et focalisé, et la répartition détaillée en sortie pour un faisceau dont la position est décalée,

- la figure 6 représente graphiquement le déplacement d'une masse sismique soumise à une accélération, en fonction de la fréquence de celle-ci,
- les figures 7A et 7B sont des représentations graphiques comparatives pour un dispositif sans guide multimode et un dispositif avec guide multimode,
- la figure 8 représente des signaux de sortie d'un dispositif selon l'invention,
- les figures 9A et 9B décrivent une réalisation de l'invention avec réflecteurs optiques en sortie de guide optique,
- la figure 9C représente une zone de connexion d'une fibre optique et des élargissements de cette zone,
- la figure 10 représente une poutre lestée,
- les figures 11A et 11B représentent des étapes de réalisation d'un dispositif selon l'invention, avant et après gravure du substrat,
- les figures 12A à 12C sont divers moyens de compensation des déformations de la partie mobile,
- la figure 13 représente une poutre lestée avec dispositif de compensation,
- les figures 14 à 15E représentent des étapes de modélisation d'un dispositif de compensation des déformations,
- la figure 16 représente la déformée d'une poutre, pour diverses valeurs de largeur de bras de compensation.

Exposé détaillé de modes de réalisation de l'invention

Un premier exemple de réalisation de l'invention peut être décrit en liaison avec la figure 2. Dans cet exemple de réalisation, les moyens de collection de la lumière comprennent des guides optiques de sortie, des fibres optiques et des détecteurs.

De façon plus précise, ce dispositif comprend une couche plane, ou structure guide 10 (qui peut être composée d'une ou plusieurs couches), qui est réalisée sur un substrat 12, par exemple en silicium monocristallin, et qui présente une face d'entrée E et une face de sortie S parallèles, obtenues par exemple par clivage. La structure guide 10 comporte par exemple une couche tampon 14 en oxyde de silicium (8 à 12 μm d'épaisseur), et une couche supérieure 16 en silice (2 à 10 μm d'épaisseur), cette dernière pouvant, pour certaines applications être remplacée par de l'air.

La structure guide comprend également un microguide d'entrée 18 et deux microguides de sortie 20 et 22, en oxyde de silicium dopé par exemple par du phosphore, de 2 à 6 μm de hauteur et de 2 à 8 μm de large ainsi qu'un coupleur multimode 24 ayant sensiblement la même hauteur (de 2 μm à 6 μm), pour une largeur typiquement comprise entre 10 μm et 50 μm. Les microguides 18, 20, 22 sont parallèles à une direction x elle-même parallèle à la plus grande surface 9 de la couche plane ou structure guide 10, et ils sont disposés de part et d'autre d'un évidement 26 traversant la structure guide 10.

On a donné ci-dessus un exemple de réalisation particulier de structure guidante mais l'invention peut s'appliquer à d'autres types de structures telles que par exemple celles obtenues par échange d'ions dans des substrats de type verre, niobate de lithium ou par dépôts ou gravures de couches du type silice, $Si_3N_4$, $SiO_xN_y$, AsGa, InP, etc....

L'évidement 26 définit, dans la structure guidante 10 et le substrat 12, une poutre flexible 28 orientée au repos parallèlement à la direction x, cette poutre pouvant se déplacer dans l'évidement 26 selon une direction y, parallèle à la surface 9 de la structure guide et perpendiculaire à la direction x. Cette poutre 28 comprend une extrémité fixe 30, solidaire de la partie fixe, et une extrémité libre 32 apte à se déplacer dans l'évidement 26. Dans le prolongement du microguide 18 d'entrée, un microguide central 34 s'étend sur toute la longueur de la poutre 28, son extrémité 36 débouchant à l'extrémité 32 de celle-ci.

Le coupleur multimode 24 est disposé en regard de l'extrémité 36 du microguide 34. On entend par coupleur multimode, un coupleur ou un guide multimode présentant plusieurs modes de propagation ou plusieurs guides mono-monomodes.

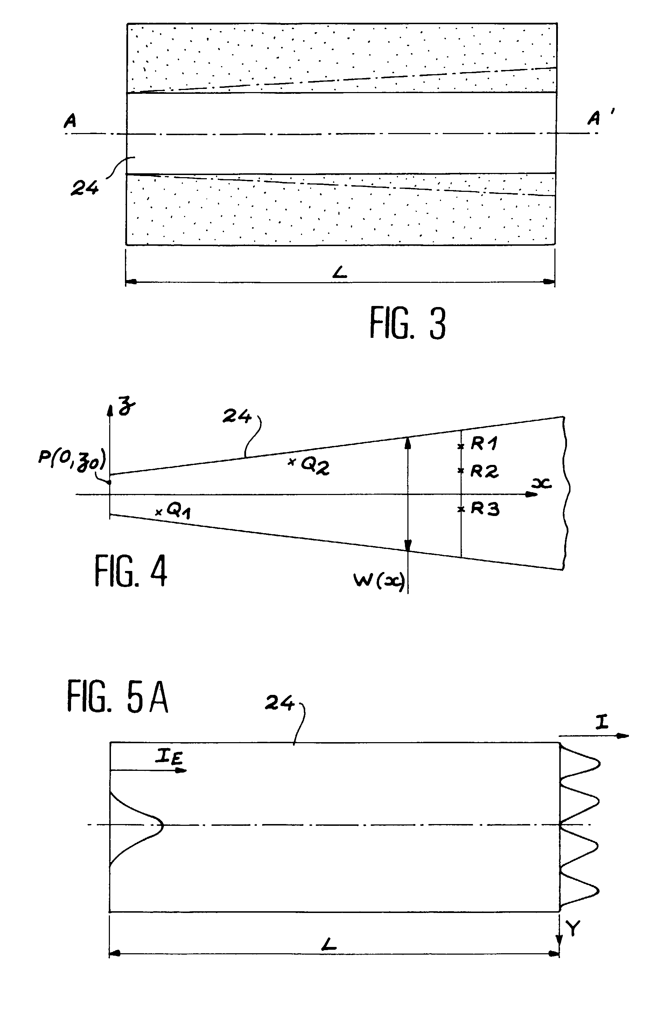

Le coupleur multimode 24 peut être droit (figure 3) mais il peut avoir également la forme d'un entonnoir, comme illustré en traits interrompus sur la figure 3.

Le coupleur multimode 24 présente un axe de symétrie, repéré sur la figure 3 par l'axe (AA'), que le guide soit droit ou en entonnoir.

La longueur L du coupleur multimode 24 est telle qu'un signal optique, issu du microguide de la partie mobile (poutre flexible) est transmis vers les N moyens de collection de la lumière. De préférence, L est telle que, lorsqu'un faisceau incident I dirigé sur la section d'entrée du coupleur présente une répartition d'intensité comportant un seul maximum, on obtienne un faisceau de sortie présentant un nombre N de maximum, avec $N \geq 2$.

Les conditions pour obtenir un tel résultat sont données, par exemple, par la méthode analytique décrite pour des coupleurs multimodes dans un article de R. Ulrich et al., intitulé "Self imaging in homogeneous planar optical waveguides", publié dans Applied Physics Letters, vol.27, n°6, 15 septembre 1975, pages 337-339.

Selon cet article, ainsi qu'illustré sur la figure 4, pour tout coupleur multimode 24, parallèle ou en entonnoir, et pour tout point objet P à l'intérieur du coupleur, il existe un certain nombre d'images réelles simples de P, en différents points $Q_1$, $Q_2$, etc. du coupleur, en aval de P dans le sens de propagation de la lumière et, à des positions intermédiaires, des images multiples de P (par exemple, en $R_1$, $R_2$, $R_3$ sur la figure 4).

Les problèmes d'aberrations ainsi que de résolution sont traités par ailleurs, dans l'article de R. Ulrich et al., intitulé "Resolution of self-images in planar optical waveguides", paru dans Journal of Optical Society of America, Vol. 68, N°5, 1978, p. 583-592.

Quelles que soient les caractéristiques du coupleur multimode, on peut aussi déterminer la longueur nécessaire pour obtenir une répartition d'intensité à plusieurs maxima en sortie pour une répartition à un seul maximum en entrée, en appliquant des méthodes de type numériques telles que la "beam propagation method" (BPM) et ses variantes, décrites dans l'article de M.D. Feit et al. ("Light propagation in graded-index optical fibers", Applied Optics 1978, vol. 17, n°24, pp. 3990-3998), de G.R. Hadley ("Transparent boundary condition for beam propagation", Optics Letters, 1991, vol. 16, n°9, pp. 624-626) et dans l'article de Chung et al. ("An assessment of Finite Difference Beam propagation method", IEEE Journal of Quantum Electronics, vol. 26, n°8, pp. 1335-1339, 1990). Cette méthode de calcul numérique, qui repose sur la résolution de l'équation d'onde est plus précise que la méthode analytique citée ci-dessus. On peut même se procurer dans le commerce des logiciels de calcul basés sur cette méthode numérique (par exemple, le BPM CAD décrit dans National Optics Institute Bulletin, Special Edition Nov. 1991, Quebec, Canada).

De façon alternative, on peut utiliser, à la place d'un coupleur multimode 24 large, plusieurs guides monomodes de préférence parallèles entre eux, suffisamment proches pour que leurs modes puissent échanger de l'énergie. Pratiquement, les guides monomodes voisins doivent être situés à une distance inférieure à 10μm l'un de l'autre, de préférence inférieure à 5μm. La largeur d'un seul guide monomode est d'environ 1 à 2 μm. La longueur nécessaire pour obtenir le même résultat qu'avec un coupleur multimode, c'est-à-dire une répartition d'intensité à plusieurs maxima en sortie pour une répartition d'intensité à un seul maximum en entrée, est obtenue en appliquant par exemple les mêmes méthodes numériques que citées ci-dessus.

Le fonctionnement d'un tel coupleur multimode peut être expliqué, en liaison avec les figures 5A à 5C. Celles-ci concernent un exemple de coupleur pour lequel la largeur W et la longueur L sont choisies de façon à ce que, si le système est au repos, c'est-à-dire si le faisceau d'entrée $I_E$ comporte une répartition d'intensité à un seul maximum, centré sur l'axe de symétrie du coupleur, on obtient en sortie une répartition d'intensité avec 4 maxima, en 4 points $M_1$, $M_2$, $M_3$, $M_4$, répartis symétriquement par rapport à l'axe de symétrie du coupleur (on dit aussi qu'on obtient 4 images en sortie).

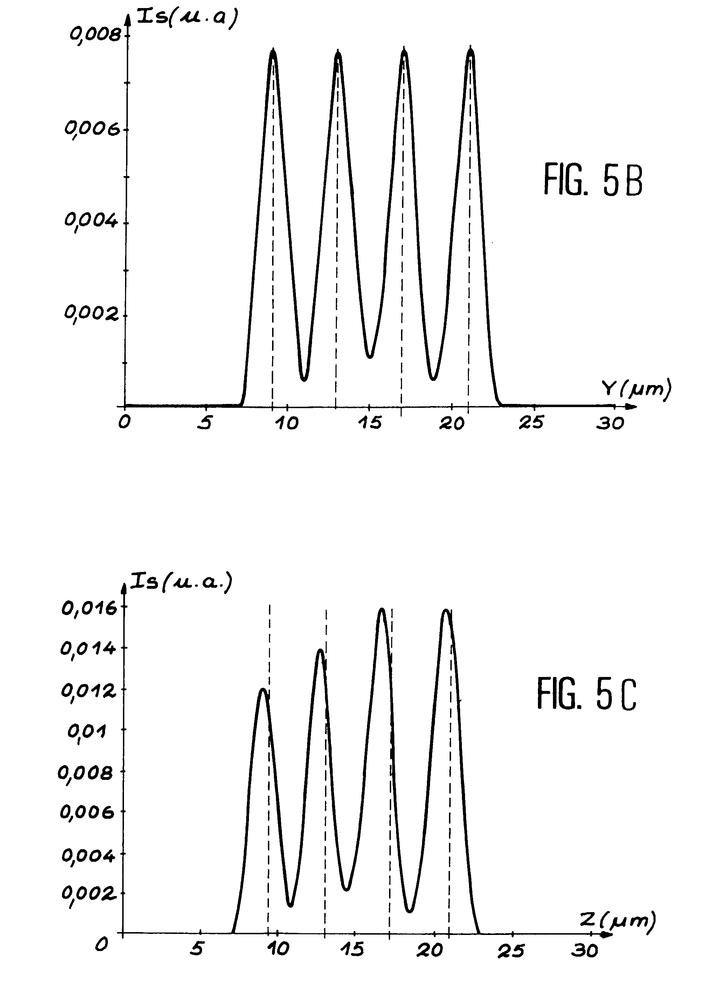

La figure 5A représente schématiquement la répartition des intensités en entrée et en sortie de coupleur, la figure 5B représente de façon plus détaillée la répartition des images en sortie. Au repos, les intensités $I_1$, $I_2$, $I_3$, $I_4$ mesurées respectivement en $M_1$, $M_2$, $M_3$, $M_4$ sont égales :

$$I_1 = I_2 = I_3 = I_4.$$

Lorsque le faisceau d'entrée est décentré, la répartition d'intensité à la sortie du coupleur multimode se trouve déséquilibrée, cette fois de manière dissymétrique par rapport à l'axe AA'. Ceci est illustré sur la figure 5C, qui représente l'évolution de la répartition détaillée de l'intensité en sortie de coupleur.

Dans le cas d'un coupleur dont les caractéristiques sont telle qu'on obtient N=2 maxima en sortie, pour 1 maximum en entrée, le principe de fonctionnement est le même : il y a déséquilibre, de la répartition d'intensité du signal produit en sortie lorsque le maximum du faisceau d'entrée est déplacé.

Le fonctionnement d'un dispositif ou capteur selon l'invention est le suivant.

Un signal optique est produit par une source de rayonnement (par exemple à la longueur d'onde 0,78 μm) non représentée sur la figure 2, puis est transmis par une fibre optique 17 d'entrée et par le microguide 18 puis 34 en direction du coupleur multimode 24. A la sortie de ce dernier, N guides de sortie 20, 22 (N=2 sur la figure 2) transmettant le rayonnement issu du coupleur 24 vers N fibres optiques 38, 40, elles-mêmes reliées à N photodétecteurs 42, 44. Chaque microguide de sortie est positionné à l'endroit de formation d'un maximum, en sortie du coupleur, lorsque le faisceau d'entrée est en position centrée sur l'entrée du coupleur. Chaque détecteur délivre un signal représentatif du signal optique transmis par la fibre optique en sortie de laquelle il est disposé. Enfin, ces détecteurs sont reliés à des moyens 46 de traitement des signaux qu'ils délivrent.

Le traitement des signaux par les moyens 46 peut être réalisé de plusieurs manières. On peut, par exemple, numériser chaque signal délivré par un photodétecteur (et cela à l'aide d'un convertisseur analogique-numérique) et réaliser ensuite le traitement sous forme numérique à l'aide d'un microprocesseur. On peut aussi traiter analogiquement les signaux délivrés par les photodétecteurs à l'aide de circuits de type amplificateurs ou amplificateurs opérationnels.

Le dispositif 46 intègre aussi des moyens pour réaliser différentes opérations sur les quantités mesurées, notamment des opérations de combinaison de ces quantités entre elles (une combinaison

$$S = \sum_{i=1}^{N} \lambda_i S_i$$

est par exemple alors formée, où $\lambda_i$ est un coefficient de pondération du signal Si provenant du détecteur i). Il peut aussi évidemment intégrer tout moyen nécessaire à la mémorisation des données.

Par exemple, lorsqu'une vibration ou accélération se produit, l'extrémité libre de la poutre 28 se déplace suivant la direction y, ce qui modifie la répartition du rayonnement en sortie du coupleur multimode, donc du rayonnement transmis par les N guides de sortie 20, 22, et donc le signal produit par les détecteurs 42, 44. Ainsi qu'on l'a déjà exposé, le déplacement $d_y$ est lié à l'accélération $\gamma$ de la vibration par la relation :

$$d_y = \frac{\gamma}{(2\pi f_o)^2} \tag{1}$$

où $f_o$ est la fréquence de résonance naturelle de la poutre 28.

D'une manière générale, la conception d'un dispositif ou d'un capteur selon l'invention est guidée par un cahier des charges spécifiant de préférence :

- le domaine de mesure d'accélération voulu : d'une certaine accélération minimum $\gamma_{min}$ à une certaine accélération maximum $\gamma_{max}$, et
- le domaine de fréquence de mesure voulu : d'une certaine fréquence $f_{min}$ à une certaine fréquence de mesure $f_{max}$.

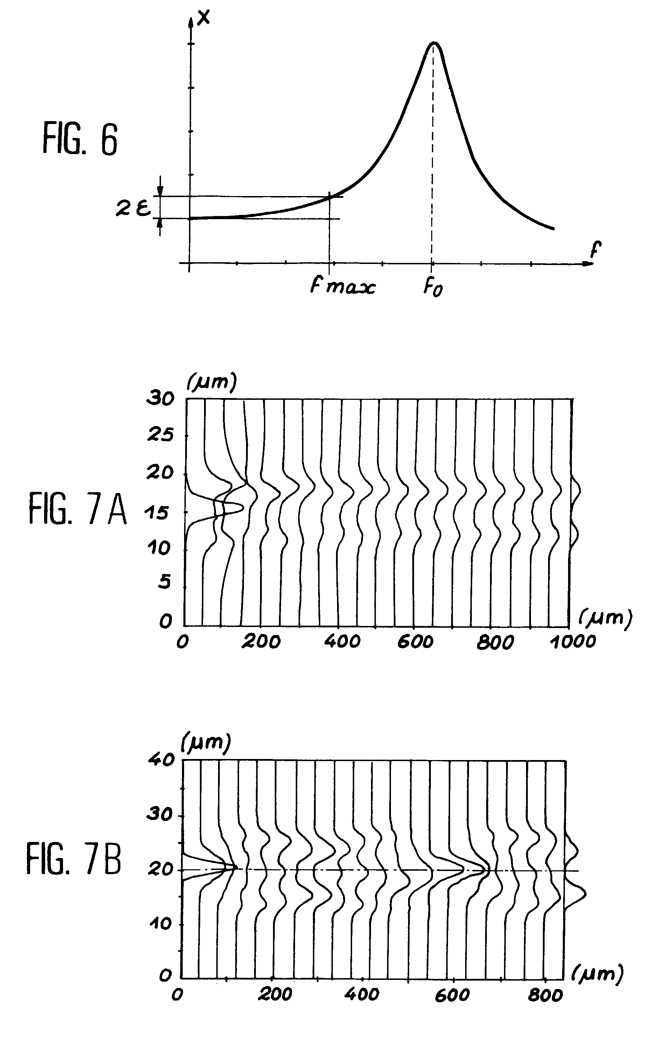

Par ailleurs, le capteur a, de préférence, une réponse plate en fréquence, c'est-à-dire que le rapport signal sur accélération doit être constant avec la fréquence de l'accélération, ceci à une certaine précision $\varepsilon$ (typiquement, E=1%, 2% ou 5%). Le déplacement dy d'une masse sismique en fonction de la fréquence présente, d'une manière générale, la forme de la figure 6.

$f_{max}$ (la fréquence maximum de mesure linéaire) est alors donnée Dar la relation :

$$f_{max} = \sqrt{\frac{2\varepsilon}{1+2\varepsilon}} f_o \tag{2}$$

où $f_o$ est la fréquence de résonance de la masse sismique. $f_{max}$ et $\varepsilon$ étant donnés par le cahier des charges, cette relation permet de fixer la fréquence de résonance $f_o$. Une fois $f_o$ obtenue, le déplacement $d_\gamma$ de la masse sismique en fonction de l'accélération $\gamma$ est donné par la relation (1) ci-dessus.

Ainsi, le dimensionnement de la masse sismique revient à fixer les dimensions géométriques de la structure pour obtenir un certain déplacement $d_y$, lorsqu'elle est soumise à une accélération $\gamma$.

Les figures 7A et 7B représentent des simulations comparatives, effectuées respectivement :

- Fig. 7A : pour un capteur sans coupleur multimode. Le microguide de la poutre est situé en regard de deux microguides de sortie. La micropoutre est amenée en position décalée par rapport à sa position de repos, de manière à ce que le faisceau transmis incident entre les entrées des deux guides soit décalé de 0,5 μm par rapport au milieu de ces deux mêmes guides.
- Fig. 7B : pour un capteur avec coupleur multimode. La micropoutre est décalée de la même quantité que pour la figure 7A (0,5 μm par rapport à l'axe du coupleur repéré par un trait interrompu).

Dans le premier cas (Fig. 7A), il y a beaucoup de pertes lumineuses et les signaux transmis en sortie des deux guides sont très peu différents.

Dans le second cas, le résultat est clairement meilleur puisqu'il y a beaucoup plus d'énergie dans les guides de sortie. De plus l'intensité lumineuse dans le guide de sortie du bas est bien plus importante que dans le guide de sortie du haut. Le signal est donc bien plus important que dans le cas précédent.

Cet exemple comparatif montre que l'introduction d'un coupleur multimode permet de mettre en évidence des déplacements de la micropoutre auxquels un dispositif classique n'est pas sensible.

En outre, l'utilisation d'un guide multimode permet d'éviter une perte d'une partie de l'énergie lumineuse issue du guide mobile : le rapport signal/bruit s'en trouve amélioré.

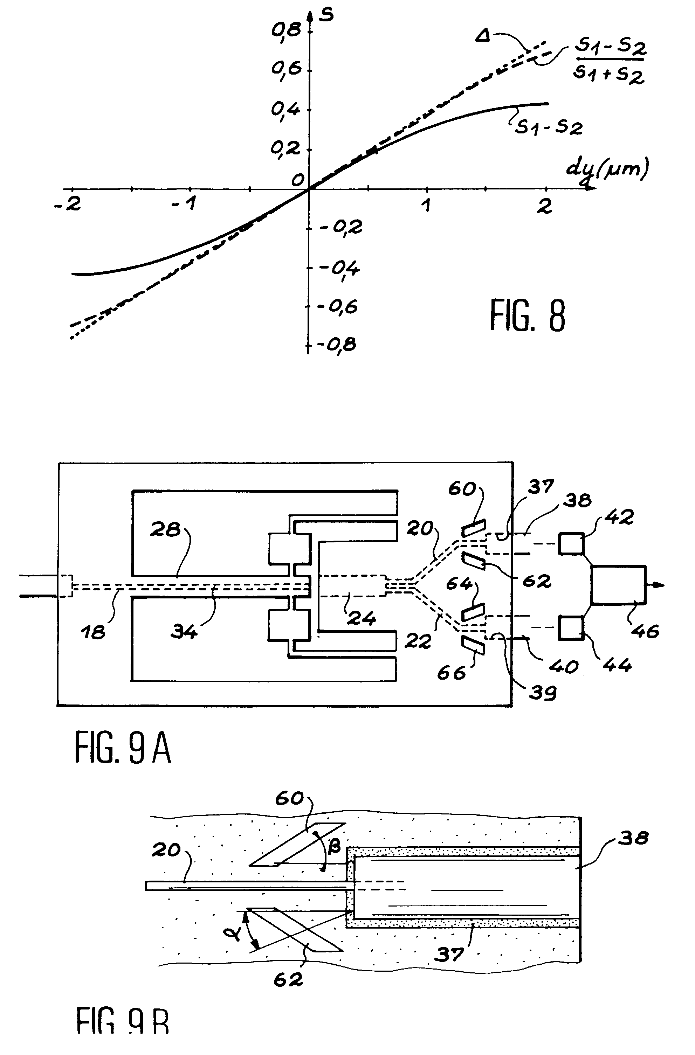

La figure 8 montre le signal S issu d'un capteur ou d'un dispositif selon l'invention, en fonction du déplacement $d_y$ du guide mobile. Deux détecteurs de sortie (N=2) fournissent respectivement un signal $S_1$, $S_2$.

Il apparaît sur la figure 8 que la différence des signaux $S=S_1-S_2$ permet d'obtenir un signal quasiment linéaire pour des déplacements assez faibles (la réponse parfaitement linéaire est une droite A tracée en traits interrompus).

En effectuant le traitement $(S_1-S_2)/(S_1+S_2)$, on obtient un signal quasiment linéaire sur une plus grande plage de déplacements du guide mobile.

Comme illustré sur la figure 9A, qui représente un dispositif selon l'invention, en vue de dessus (les références numériques sont les mêmes que sur la figure 2), il est possible de rajouter des réflecteurs 60, 62, 64, 66, de part et d'autre de chaque guide 20, 22 de sortie, et devant la connexion de ces guides aux fibres optiques 38, 40 de sortie.

La fonction de ces réflecteurs peut être expliquée de manière plus précise à l'aide de la figure 9B qui représente l'extrémité du seul guide 20 de sortie, la connexion à la fibre optique 38 et deux réflecteurs 60, 62. Ces derniers sont, dans l'exemple illustré sur la figure 9B, des rectangles creusés dans le dispositif au cours de la même étape de réalisation que celle de la structure mécanique (structures 14, 16 et guides 20, 22) et des trous de réception des fibres.

Les réflecteurs doivent avoir un indice de réfraction $n_2$ inférieur à l'indice de réfraction $n_1$ du milieu environnant. Aussi les trous creusés doivent comporter un matériau d'indice $n_2$ qui peut être une couche métallique ou un milieu gazeux tel que l'air ($n_{air}=1$) ou même le vide ($n_{vide}=1$).

Par ailleurs, une fibre optique est caractérisée par son cône d'acceptance d'angle $\alpha$. Si l'angle d'un rayon est inférieur à l'angle de ce cône d'acceptance $\alpha$, alors le rayon rentre dans la fibre optique de sortie et est guidé. Si son angle est supérieur à $\alpha$, alors il n'est pas guidé par la fibre optique de sortie.

De plus, lorsqu'un rayon se propageant dans un milieu d'indice $n_1$ rencontre une interface avec un milieu d'indice de réfraction $n_2$ inférieur à $n_1$, il est totalement réfléchi lorsque l'angle que fait ce rayon avec la normale au plan de l'interface est supérieur à Arcsin $(n_2/n_1)$.

Les réflecteurs permettront donc de réfléchir les rayons parasites dont les angles sont dans le cône d'acceptance de la fibre optique lorsque l'angle $\beta$ que fait son côté principal avec l'axe du guide 20 et de la fibre 38 sera tel que :

$$\beta \;<\; \frac{\pi}{2} \;-\; \alpha \;-\; \mathrm{Arcsin}\!\left(\frac{n_2}{n_1}\right),$$

où $n_2$ est l'indice du réflecteur et $n_1$ l'indice de la couche ou structure guidante.

Plus $n_2$ est inférieur à $n_1$ et plus le réflecteur réfléchira un domaine angulaire important. On a donc intérêt à prendre $n_2$ le plus faible possible (donc de l'air ou du vide).

Les rayons en dehors du cône ainsi défini sont des rayons parasites qui ne s'introduisent pas dans la fibre.

Ainsi, seuls les rayons issus du microguide sont transmis à la fibre.

Un exemple de procédé de réalisation d'un dispositif selon l'invention pourra comprendre les étapes suivantes :

- une étape de formation de la couche 14, par exemple par oxydation thermique du substrat 12,
- le dépôt d'une couche de silice par LPCVD ou par PECVD, que l'on dope par exemple avec du phosphore,
- une étape de réalisation (par exemple par photolithographie) d'un masque de résine positif masquant les zones destinées à constituer les microguides 34, 20, 22, et le coupleur multimode 24 (ou les guides monomodes couplés),
- une étape de gravure anisotrope (du type ionique réactive) réalisée à travers ce masque, pour obtenir les microguides et le coupleur multimode ; le masque est ensuite éliminé avec un plasma d'oxygène,
- une étape de dépôt de la couche 16 par technique de dépôt chimique en phase vapeur basse pression (LPCVD), ou assisté plasma (PECVD),
- une étape de réalisation d'un autre masque (comme ci-dessus),afin de dégager la poutre 28,
- une étape de gravure anisotrope, du type gravure ionique réactive avec par exemple du $CHF_3$, cette étape permet de graver les couches 14 et 16, à la fois pour définir la poutre et les zones de connexion,
- une étape de gravure isotrope (gravure ionique réactive avec par exemple du $SF_6$) du substrat en silicium 12, en utilisant le même masque, afin de dégager la poutre du substrat, mais aussi de terminer la réalisation des zones de connexion 37, 39 (figures 9A et 9B) des fibres optiques 38, 40.

Si des réflecteurs sont prévus (comme par exemple sur la figure 9B), les emplacements correspondants sont creusés en même temps que les zones de connexion des fibres.

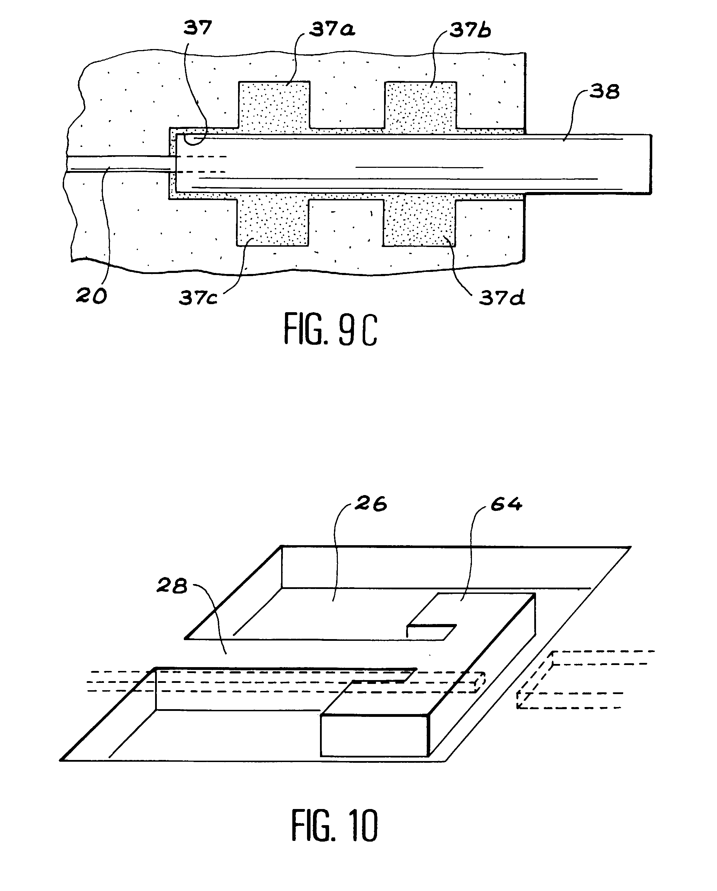

Comme illustré sur la figure 9C (qui ne représente qu'un seul des guides de sortie et la fibre optique correspondante) la zone de connexion 37 prévue pour une fibre 38 peut en outre être élargie à certains endroits 37a, 37b, 37c, 37d pour faciliter l'apport de colle optique permettant le maintien des fibres. Les élargissements 37a-37d sont réalisés en même temps que la zone 37 de connexion. Ceci peut s'appliquer à chaque zone de connexion d'une fibre.

Quel que soit le mode de réalisation envisagé, la forme des poutres peut également être modifiée de manière à accroître la sensibilité et/ou à s'affranchir des problèmes de déformation parasites et de sensibilité suivant l'axe z (vertical ou perpendiculaire au plan 9 du dispositif).

De manière plus précise, et comme illustré sur la figure 10 (qui ne représente que la poutre 28 dans l'évidement 26), la poutre peut être lestée. Une manière de lester la poutre consiste à avoir une extrémité libre 64 plus volumineuse. Il en résulte une poutre de masse plus importante et, donc, pour une même accélération, des déplacements plus importants de l'extrémité libre. Ceci permet de détecter plus aisément des accélérations très faibles.

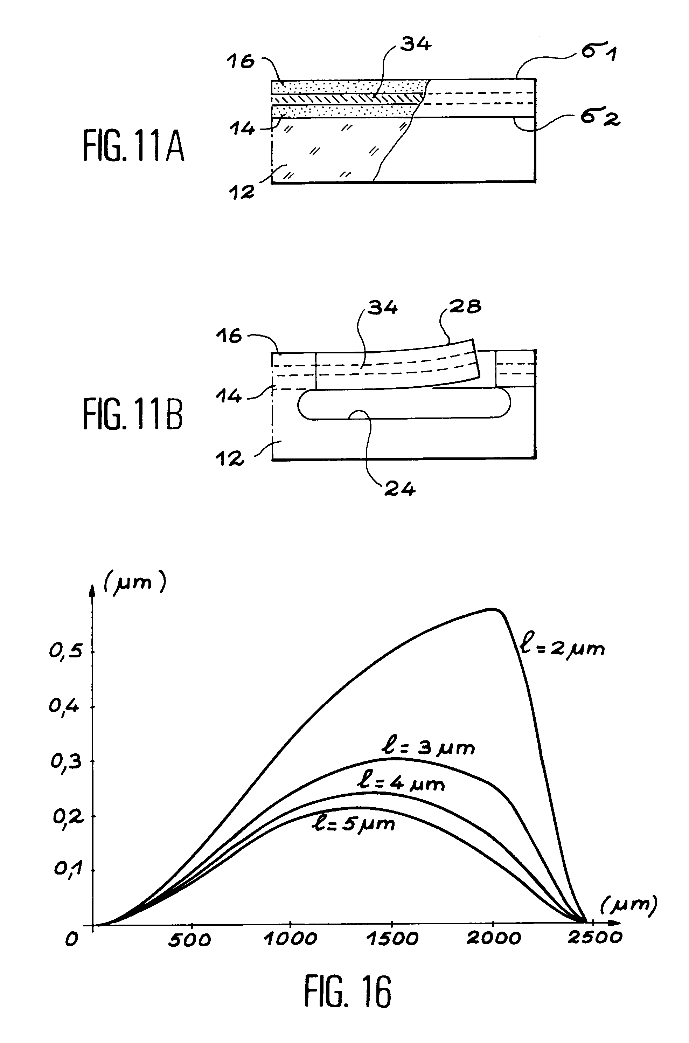

Un autre problème est lié à la sensibilité de la poutre suivant l'axe z, c'est-à-dire suivant une direction perpendiculaire au plan du dispositif. L'étape de réalisation de la poutre peut conduire à un gradient de contraintes selon la direction verticale z, qui est à l'origine d'une déformation du système. C'est en particulier le cas lorsque la poutre est en silice, obtenue par dépôt PECVD, avec différents dopages en phosphore. Ceci est illustré sur la figure IIA, où les références numériques identiques à celles de la figure 2 y désignent les mêmes éléments. Cette figure représente la structure obtenue avant l'étape de dégagement de la poutre. Sur cette figure 11A, $\sigma_2$ désigne la contrainte à l'interface substrat 12-couche mince (14, 34, 16) et $\sigma_1$ désigne la contrainte à la surface de la couche mince. Du fait des différences de nature entre les sous-couches 14, 34 et 16, ainsi que des différences de dopage en phosphore dans la couche, il apparaît un gradient de contraintes dans la couche mince : la contrainte $\sigma_2$ est inférieure à la contrainte $\sigma_1$. Ceci conduit, lorsque l'on dégage la poutre 28, c'est-à-dire lorsque l'on creuse la cavité 26 sous la poutre 28, à une déviation verticale de cette poutre qui désaxe complètement les guides optiques d'entrée et de sortie, ce qui peut rendre le dispositif inopérant, comme illustré sur la figure 11B.

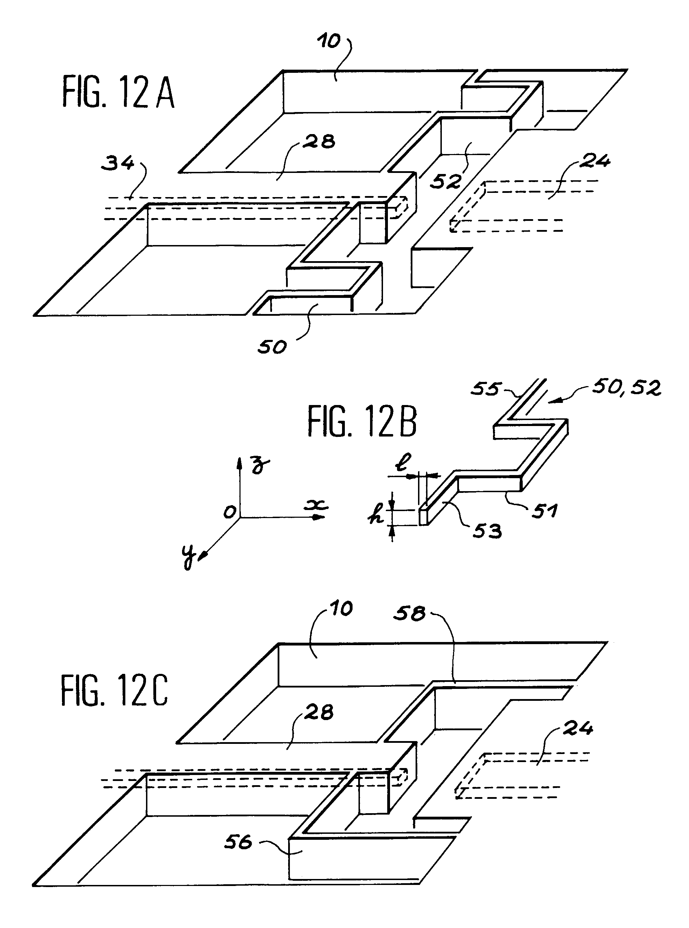

Une première solution à ces problèmes, rentrant dans le cadre de la présente invention, est illustrée sur la figure 12A. Des références identiques à celles de la figure 2 y représentent les mêmes éléments, mais l'ensemble est représenté de manière plus schématique.

Le système de compensation est constitué de deux bras 50, 52 qui relient l'extrémité libre de la poutre 28 au reste de la structure 10, qui est une partie fixe, puisque reliée au substrat 12 de silicium. Comme on le voit plus en détail sur la figure 12B, chaque bras 50, 52 peut être constitué d'un corps 51 en "U", une branche 53, 55 étant rajoutée à l'extrémité libre et de manière sensiblement perpendiculaire à chaque branche latérale du "U". L'extrémité libre d'une de ces branches 53, 55 est reliée à la poutre 28, l'extrémité libre de l'autre branche est reliée au reste de la structure guide 10. Il en va de même pour le deuxième bras compensateur.

La géométrie des bras compensateurs peut être envisagée de diverses façons. Néanmoins, les bras sont plutôt choisis rigides dans le sens vertical (direction z) et souples dans le sens horizontal (plan xy). On peut jouer sur la géométrie des bras en augmentant le facteur de forme hauteur/largeur, la hauteur h et la largeur 1 étant identifiées sur la figure 12B comme étant respectivement la hauteur de la section du bras compensateur dans une coupe verticale (suivant un plan parallèle à zx), et la largeur du bras compensateur dans la même coupe verticale. En jouant sur ce facteur de forme, on peut obtenir une souplesse suffisante, dans le plan xy, pour ne pas entraver les déplacements de la poutre dans ce même plan et une rigidité suffisante, suivant la direction z, pour limiter les déformations de la poutre suivant cette même direction.

Selon un autre mode de réalisation, les bras sont droits, ou de forme droite.

Un autre mode de réalisation des bras compensateurs est illustré sur la figure 12C. Sur cette figure, on voit encore deux bras compensateurs 56, 58, mais chaque bras est approximativement en forme d'équerre avec deux segments sensiblement perpendiculaires l'un à l'autre. Là encore, on jouera sur le rapport de forme hauteur/largeur de la section de chaque bras, de façon à lui donner la rigidité désirée dans le sens vertical, et la souplesse souhaitée dans le plan horizontal.

Le système peut aussi fonctionner avec un seul bras compensateur. Néanmoins, un mode préféré de réalisation est celui où le système est symétrique dans le plan horizontal (comme sur les figures 12A et 12C, par rapport à un plan médian parallèle à zOx). D'une façon plus générale, si la partie mobile dont on veut corriger les déformations présente une certaine symétrie spatiale, il est souhaitable que le système de compensation présente la même symétrie. Cette géométrie permet d'éviter les petites déformations latérales qui pourraient apparaître par flambage des bras, du fait que la silice, ou le matériau constitutif de la partie mobile, se trouve globalement en compression.

Ces différentes structures de bras de compensation permettent de réduire d'une part la sensibilité du dispositif suivant l'axe z et, d'autre part, les déviations suivant ce même axe z, dues aux gradients de contraintes.

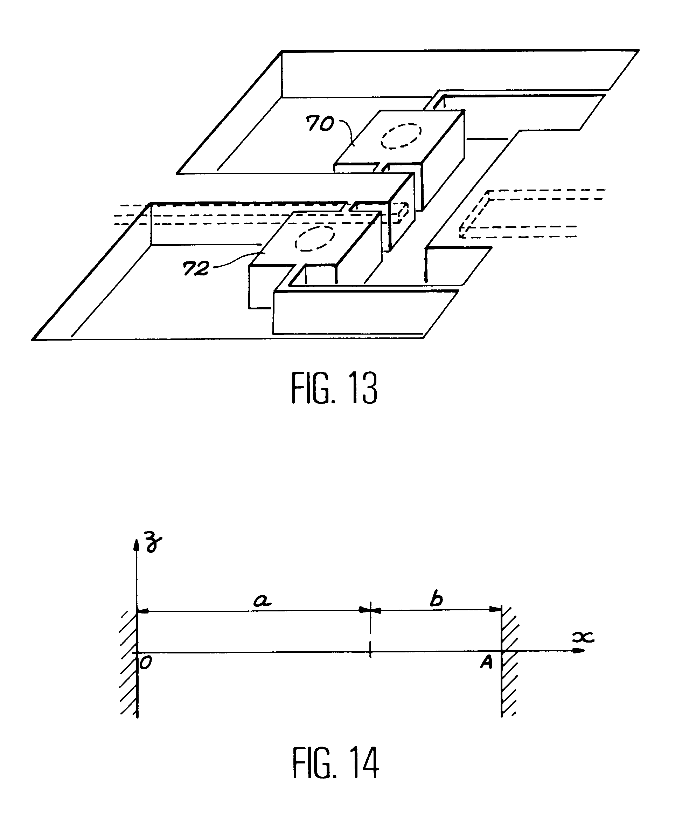

Enfin, comme illustré sur la figure 13, il est possible de combiner les deux modes de réalisation ci-dessus en utilisant à la fois une poutre lestée et des bras de compensation. Le dispositif bénéficie alors des avantages des deux modes de réalisation.

Quelle que soit la forme retenue pour les bras de compensation, ces derniers sont réalisés, par exemple, en même temps que la poutre principale, par gravure. Seule change la géométrie du masque de gravure.

Dans le cas où le dispositif incorpore, de part et d'autre de la poutre, des éléments de lest (tels les éléments 70, 72 de la figure 13), la libération de la poutre centrale et de ces éléments 70, 72 a lieu simultanément à la réalisation des trous de connexion pour les fibres optiques. Or, la profondeur de gravure, et donc le temps de gravure, sont déterminés par le diamètre de la fibre. Ce temps est en général inférieur au temps nécessaire pour dégager la structure mécanique, si cette dernière incorpore en outre des éléments de lest. Pour remédier à ces inconvénients, on peut donc préalablement réaliser des trous (tels les trous représentés en traits interrompus sur la figure 13) dans les éléments de lest. Ces trous sont réalisés au moment de la gravure de la couche 10 pour définir les éléments de lest. Ces trous facilitent le dégagement de la structure mécanique, et peuvent avoir n'importe quelle forme. Leur dimension est adaptée à la méthode de réalisation ou de gravure choisie.

Un procédé de dimensionnement de bras compensateurs va maintenant être décrit.

Ce procédé consiste d'abord à modéliser le système réel poutre + bras de compensation de la manière suivante (voir figure 14) :

- la micropoutre est assimilée à une première poutre simple de longueur a (longueur de la micropoutre réelle), de rigidité $E_1 x I_1$ ($E_1$ représente le module d'Young de la micropoutre et I1 son moment d'inertie) ; elle est encastrée dans un support fixe en un point O, qu'on prend également comme origine d'un repère Oxz,
- les bras de compensation sont assimilés à une seconde poutre de longueur b (longueur d'un bras de compensation), dont une extrémité est encastrée dans un support fixe, en un point A, alors que l'autre extrémité, libre, est reliée à l'extrémité libre de la poutre de longueur a, de rigidité $E_2 x I_2$ ($E_2$ représente le module d'Young des bras de compensation, $I_2$ le double du moment d'inertie d'un seul bras, la seconde poutre étant affectée d'un poids double de celui d'un seul bras de compensation).

La modélisation ci-dessus est valable pour des poutres de géométries différentes, les différences de géométrie se reflétant dans le calcul des moments d'inertie $I_1$ et $I_2$.

Pour la suite, il est en outre supposé que les poutres sont solidaires, c'est-à-dire que la partie des bras compensateurs, perpendiculaire à l'axe de la poutre, ne se déforme pas. Ceci est justifié, dans la mesure où la longueur des bras perpendiculaire est, typiquement, de l'ordre de cinq fois plus faible que la longueur des bras parallèles, et que la déformation est d'une manière générale proportionnelle au cube de cette longueur. Il y a donc un facteur 100 (au moins) entre la déformation des bras parallèles et celle des bras perpendiculaires, et la plus faible est donc négligée.

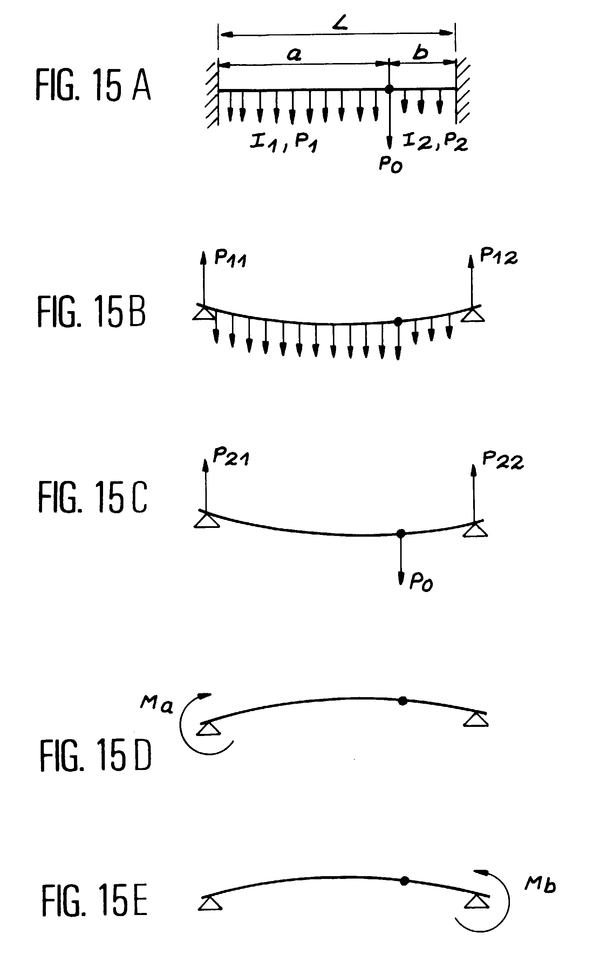

Pour être complet, le modèle retenu est celui de la figure 15A où, à la poutre de longueur totale a+b décrite ci-dessus, est affecté un champ de forces réparties $P_0$, $P_1$, $P_2$. $P_0$ représente le poids du lest, $P_1$ représente le poids réparti de la poutre principale, $P_2$ représente le poids réparti des bras de compensation ($P_1 = \rho S_1 g$ où $\rho$ désigne la masse volumique du matériau, $S_1$ la section de la poutre et g l'accélération ; $P_2 = \rho 2 S_2 g$ où $S_2$ est la section d'un bras de compensation).

Ce modèle est ensuite décomposé comme illustré sur les figures 15B à 15E. A chacune de ces figures correspond un champ de contraintes et une déformée $y_1(x)$, $y_2(x)$ ($y_1$ pour $0 \leq x \leq a$ et $y_2$ pour $a \leq x \leq a+b$) :

- dans le cas de la figure 15B, la poutre équivalente est soumise à une force répartie le long de celle-ci, et elle est libre de tout couple aux extrémités. $P_{11}$ et $P_{12}$ désignent les forces de réaction aux deux extrémités,
- dans le cas de la figure 15C, la poutre équivalente est soumise à une force ponctuelle au centre de gravité de la masse de lestage, et elle est libre de tout couple aux deux extrémités. $P_{21}$ et $P_{22}$ désignent les forces de réaction aux deux extrémités.
- dans le cas de la figure 15D, la poutre équivalente est soumise à un couple $M_a$ à une extrémité, et elle est libre de tout couple à l'autre extrémité,
- dans le cas de la figure 15E, la déformée de la poutre équivalente est soumise à un couple $M_b$ à l'autre extrémité et elle est libre de tout couple à la première extrémité.

La déformée totale de la poutre est la somme des quatre déformées calculées séparément. Enfin, les couples imposés aux extrémités sont déterminés en imposant des angles de déformées nuls aux deux extrémités de la déformée totale.

Les calculs ne font intervenir que des déformées polynomiales. L'application des conditions aux limites conduit rapidement à des expressions assez lourdes des constantes d'intégration de ces polynômes. Pour cette raison, on se limite ici à la présentation de la méthode ainsi qu'aux principaux résultats, sans rentrer dans le détail du calcul. Ce dernier peut être effectué à l'aide d'un logiciel de calcul symbolique (par exemple Mathematica, de la société Wolfram Research).

**1.** Calcul de la déformée pour le cas de la figure 15B.

Dans un premier temps, les forces de réaction $P_{11}$ et $P_{12}$ sont calculées. Pour cela, on écrit l'équilibre des forces et l'équilibre des moments au point de jonction entre les deux poutres :

$$\begin{cases} P_{11} + P_{12} = p_1 a + p_2 b \\ \sum M_A = 0 \Rightarrow P_{11}a - \frac{1}{2} p_1 a^2 + \frac{1}{2} p_2 b^2 - P_{12}b = 0 \end{cases}$$

$P_{11}$ et $P_{12}$ sont obtenus à partir de ces deux équations. La deuxième étape consiste à exprimer, en tout point x, le moment $M_x$ dû aux forces présentes en amont de ce point :

-   Si 0<x<a, alors

$$M_x = P_{11}x - \frac{1}{2} p_1 x^2.$$

-   Si a<x<a+b, alors

$$M_x = P_{11}x - \frac{1}{2} p_1 x^2 - \frac{1}{2}\left(p_2 - p_1\right)\left(x - a\right)^2$$

On obtient alors l'équation de la déformée :

-   pour 0<x<a :

$$EI_1 \frac{d^2 y}{dx^2} = \frac{1}{2} p_1 x^2 - P_{11}x$$

-   pour a<x<a+b :

$$EI_2 \frac{d^2 y}{dx^2} = \frac{1}{2} p_1 x^2 + \frac{1}{2}\left(p_2 - p_1\right)\left(x - a\right)^2 - P_{11}x$$

La troisième étape est l'intégration. On obtient :

-   pour 0<x<a :

$$EI_1 y_1(x) = A_0 + A_1 x - \frac{1}{6} P_{11}x^3 + \frac{1}{24} p_1 x^4$$

-   pour a<x<a+b :

$$EI_2 y_2(x) = B_0 + B_1 x - \frac{1}{6} P_{11}x^3 + \frac{1}{24} p_1 x^4 + \frac{1}{24}\left(p_2 - p_1\right)\left(x - a\right)^4$$

La quatrième étape consiste à trouver les constantes $A_0$, $A_1$, $B_0$, $B_1$. Pour cela, on dispose des conditions aux limites suivantes :

$$y_1(0) = 0$$

$$y_2(a+b) = 0$$

EP 0 806 687 A1

$$y_1(a) = y_2(a)$$

$$\frac{dy_1}{dx}(a) = \frac{dy_2}{dx}(a)$$

Il en résulte :

$$A_0 = 0,$$

$$B_0 = \left(\frac{I_2}{I_1} - 1\right)\left(\frac{1}{3} P_{11}a^3 - \frac{1}{8} p_1 a^4\right),$$

$$B_1 = \frac{1}{a+b}\left[-B_0 + P_{11}\frac{(a+b)^3}{6} - p_1\frac{(a+b)^4}{24} - (p_2 - p_1)\frac{b^4}{24}\right],$$

$$A_1 = \frac{I_1}{I_2}B_1 + \left(\frac{I_1}{I_2} - 1\right)\left(\frac{1}{6} p_1 a^3 - \frac{1}{2} P_{11}a^2\right),$$

avec :

$$P_{11} = \frac{1}{a+b}\left[p_1 a\left(\frac{a}{2} + b\right) + p_2\frac{b^2}{2}\right]$$

**2.** Calcul de la déformée dans le cas de la figure 15C.

La méthode est rigoureusement identique et les calculs sont même plus simples.
L'équilibre des forces et des moments conduits rapidement à :

$$P_{21} = \frac{b}{a+b}P_0, \qquad P_{22} = \frac{a}{a+b}P_0$$

Le moment $M_x$ est :

- pour $0<x<a$ :

$$M_x = \frac{bP_{21}}{a+b}x$$

- pour $a<x<a+b$ :

$$M_x = \frac{bP_{22}}{a+b}x - P(x-a)$$

et les déformées s'écrivent :

- pour 0<x<a :

$$EI_1 y_1(x) = A_0 + A_1 x - \frac{bP_{21}}{a+b} \frac{x^3}{6}$$

- pour a<x<a+b :

$$EI_2 y_2(x) = B_0 + B_1 x - P_{22} a \frac{x^2}{2} + \frac{aP_{22}}{a+b} \frac{x^3}{6},$$

avec :

$$A_0 = 0,$$

$$B_0 = \left(\frac{I_2}{I_1} - 1\right) \frac{bP_{21}a^3}{3(a+b)},$$

$$B_1 = \frac{1}{a+b}\left[-B_0 + \frac{bP_{21}}{6}\left(a^2 + 2ab\right)\right],$$

et

$$A_1 = \frac{I_1}{I_2} B_1 + \left(1 - \frac{I_1}{I_2}\right) \frac{bP_{22}a^2}{2(a+b)}$$

**3.** <u>Calcul des déformées dans les cas des figures 15D et 15E.</u>

- Figure 15D : le moment en tout point s'écrit :

$$M_x = M_a \frac{L-x}{L}$$

et la suite des calculs est équivalente aux calculs déjà donnés ci-dessus.
- Figure 15E : même calcul que pour la figure D, avec

$$M_x = M_b \frac{x}{L}.$$

Une fois que chaque déformée est calculée séparément (on désigne, pour chacun des quatre cas ci-dessus, chaque déformée par $y_{i1}$, $y_{i2}$, i=1-4), la déformée totale est obtenue par :

$$y_{tot_j}(x) = \sum_{i=1}^{4} y_{ij}(x), \qquad j = 1,2$$

On obtient alors les moments $M_a$ et $M_b$ en imposant :

$$\frac{dy_{tot_1}}{dx}(0) = \frac{dy_{tot_2}}{dx}(a + b) = 0.$$

La figure 16 donne un exemple de déformée obtenue pour une poutre en silice compensée, non lestée, sous l'effet d'une accélération de 400 m/s$^2$. La poutre fait 2 mm de long, 10 μm de large, et les bras de compensation font 500 μm de long. Les différentes courbes sont obtenues pour des largeurs "1" de bras compensateurs différentes. Suivant l'amplitude de maximum tolérée de la déformée, on retiendra des bras ayant la largeur nécessaire. Il est également possible de calculer la déformée en fonction d'un autre paramètre (par exemple, la longueur b des bras de compensation) pour en déduire la valeur dudit paramètre, à choisir pour obtenir une certaine amplitude maximum de la déformée.

Selon un exemple (mettant en oeuvre le procédé dont les étapes ont été décrites ci-dessus), un capteur a été réalisé, ayant les caractéristiques suivantes :

- épaisseur de la structure optique (structure 10 de la figure 2) : 15 μm (couche 14 : épaisseur d'environ 8,5 μm ; couche 16 : épaisseur d'environ 6,5 μm);
- indice $n_3$ des couches 14 et 16 : $n_3$=1,47,
- indice $n_4$ du microguide 34 (et des guides 18, 20, 22, ainsi que du coupleur 24) : $n_4$=1,48,
- dimension des microguides 34, 18, 20, 22 dans un plan perpendiculaire à son axe : largeur = 2,5 μm, épaisseur = 2 μm,
- dimension du coupleur multimode : 840 μmx15 μm (son comportement est donné par les figures 7B et 8),
- caractéristiques géométriques de la poutre : longueur = 2 mm, largeur = 10 μm,
- bras de compensation : longueur = 500μm, largeur = 2 μm.

L'extrémité de la poutre se déplace de 0,6 pm pour une accélération de 400 m/s$^2$ (figure 16). Sa fréquence de résonance est donc de 4100 Hz. La linéarité en fréquence est de ±5% sur une bande de fréquence allant de 0 à 1200 Hz. En supposant un rapport signal sur bruit d'environ 30 dB, on obtient un capteur ayant des spécifications suivantes :

- domaine de mesure linéaire : 0 à 1200 Hz, résonance 4100 Hz et E=5%,
- domaine d'accélération : 0 à 1000 m/s$^2$, (réponse linéaire pour des déplacements de l'extrémité de la poutre compris entre -1,5 μm et +1,5 μm),
- sensibilité de mesure : 1 m/s$^2$ (30 dB).

Les applications des dispositifs selon l'invention sont essentiellement dans le domaines des capteurs optomécaniques. Ainsi, on peut réaliser des accéléromètres ou bien des détecteurs de vibrations : la déviation de la partie, ou poutre, mobile permet de détecter une accélération ou une vibration. L'invention peut également être appliquée à la microphonie ou bien encore à la mesure de pressions, qui mettent en oeuvre la détection de vibrations ou d'une déformation appliquée à une partie mobile.

## Revendications

1. Dispositif optomécanique comportant :

   - une partie fixe (10, 12), et
   - une partie mobile (28) comportant elle-même une structure optique guidante (34), une première extrémité (30), dite fixe, rattachée à la partie fixe, une seconde extrémité (32), dite mobile, ladite partie mobile pouvant se déplacer suivant une première direction (y),
   - la partie fixe comportant N (N≥2) moyens de collection de la lumière (20, 22), et un coupleur multimode (24, 25) situé en regard de la structure optique guidante (34) de la partie mobile, et permettant de transmettre un signal optique issu de cette dernière vers les N moyens de collection de la lumière.

**2.** Dispositif optomécanique selon la revendication 1, le coupleur multimode (24, 25) étant apte, lorsque la répartition du faisceau lumineux qui est dirigé à l'entrée du coupleur comporte un maximum, à transformer cette répartition en une répartition à N (N>2) maxima en sortie du coupleur.

**3.** Dispositif optomécanique selon la revendication 1, le coupleur multimode comportant un ensemble de guides monomodes répartis de façon à pouvoir échanger de l'énergie et apte, lorsque la répartition du faisceau lumineux qui est dirigé à l'entrée de l'ensemble des guides comporte un seul maximum, à transformer cette répartition en une répartition à N (N≥2) maxima en sortie de l'ensemble des guides.

**4.** Dispositif selon la revendication 1, les N moyens de collection comportant N structures optiques guidantes de sortie.

**5.** Dispositif selon l'une quelconque des revendications précédentes, les N moyens de collection comportant N fibres optiques.

**6.** Dispositif selon l'une des revendications 1 à 5, les N moyens de collection comportant N moyens de détection (42, 44) pour détecter des signaux Si et des moyens (46) de traitement du signal pour former un signal représentatif d'une combinaison des signaux Si.

**7.** Dispositif selon la revendication 6, la combinaison étant une combinaison linéaire $\Sigma\lambda_i S_i$.

**8.** Dispositif selon la revendication 6, les moyens de collection étant au nombre de N=2, la combinaison $\Sigma\lambda_i S_i$ étant proportionnelle à la différence $S_1$-$S_2$.

**9.** Dispositif selon la revendication 8, les moyens (46) de traitement du signal permettant de former en outre un signal représentatif de la quantité $(S_1$-$S_2)/(S_1$+$S_2)$.

**10.** Dispositif selon la revendication 5, des réflecteurs (60, 62, 64, 66) disposés devant l'entrée d'au moins une des fibres optique (38, 40) permettant la réflexion de lumière parasite de façon à ce que celle-ci ne s'introduise pas dans ladite fibre optique.

**11.** Dispositif selon la revendication 5, chaque fibre optique du dispositif (17, 38, 40) étant insérée dans un trou (37, 39) pratiqué dans la partie fixe.

**12.** Dispositif selon l'une des revendications précédentes, la partie mobile (28) du dispositif étant lestée (64, 70, 72).

**13.** Dispositif selon la revendication 12, la partie mobile étant lestée à son extrémité mobile (64).

**14.** Dispositif selon la revendication 13, deux charges de lest (70, 72) étant disposées de part et d'autre de l'extrémité mobile de la partie mobile.

**15.** Dispositif selon la revendication 14, les charges de lest étant traversées par des trous.

**16.** Dispositif selon l'une des revendications 1 à 15, comportant en outre des moyens (50, 52, 56, 58) pour compenser les déformations de la partie mobile suivant une seconde direction (z) différente de la première (y).

**17.** Dispositif selon la revendication 16, les moyens pour compenser les déformations de la partie mobile comportant au moins un bras (50, 52, 56, 58) reliant d'une part l'extrémité mobile (32) de la partie mobile (28) et d'autre part la partie fixe (10) du dispositif, ce (respectivement ces) bras présentant une souplesse suffisante selon la première direction (y), de manière à ne pas entraver le déplacement de la partie mobile selon cette première direction (y), et une rigidité suffisante suivant la deuxième direction (z), de manière à limiter les déformations de la partie mobile suivant cette deuxième direction.

**18.** Dispositif selon la revendication 16, le (ou les) bras de compensation étant relié(s) à la partie fixe (10) située latéralement par rapport à la partie mobile, ou à la partie fixe (10) en regard de l'extrémité mobile de ladite partie mobile.

**19.** Dispositif selon l'une des revendications 16 à 18, la première (y) et la deuxième (z) directions étant perpendiculaires entre elles.

**20.** Dispositif selon l'une des revendications 17 ou 18, les bras (50, 52 ; 56, 58) étant au nombre de deux.

**21.** Dispositif selon la revendication 20, la partie mobile (28) présentant une symétrie par rapport à un plan médian, les deux bras (50, 52 ; 56, 58) étant symétriques l'un de l'autre par rapport au même plan médian.

**22.** Dispositif selon l'une des revendications 17 ou 18, le (ou les) bras (56, 58) ayant chacun une forme d'équerre, avec deux segments sensiblement perpendiculaires l'un par rapport à l'autre.

**23.** Dispositif selon l'une des revendications 17 ou 18, le (ou les) bras (50, 52) comportant chacun un corps (51) en forme de "U", avec une branche (53, 55) rajoutée à chaque branche latérale du "U" et de façon sensiblement perpendiculaire à celle-ci.

**24.** Dispositif selon l'une des revendications 17 ou 18, le (ou les) bras étant de forme droite.

**25.** Capteur optomécanique comportant un dispositif selon l'une des revendications 1 à 24.

**26.** Commutateur optique comportant un dispositif selon l'une des revendications 1 à 24 et des moyens de commande de la partie mobile.

FIG. 1

FIG. 2

FIG. 3

FIG. 4

FIG. 5 A

FIG. 5 B

FIG. 5 C

FIG. 6

FIG. 7A

FIG. 7B

FIG. 8

FIG. 9 A

FIG. 9 B

37   37a   37b   38
20   37c   37d

FIG. 9 C

26   64
28

FIG. 10

FIG. 11A

FIG. 11B

FIG. 16

FIG. 12 A

10

28

34

52

24

50

FIG. 12 B

$z$

$O$

$x$

$y$

55

50,52

$\ell$

$h$

53

51

FIG. 12 C

10

58

28

24

56

FIG. 13

FIG. 14

FIG. 15 A

FIG. 15 B

FIG. 15 C

FIG. 15 D

FIG. 15 E

Office européen
des brevets

# RAPPORT DE RECHERCHE EUROPEENNE

Numero de la demande

EP 97 40 1032

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE 41 36 510 A (BATTELLE INSTITUT E V) 13 Mai 1993<br>* colonne 4, ligne 52 - colonne 5, ligne 22 *<br>* figure 3 *<br>--- | 1 | G02B6/36<br>G02B6/28<br>G01H9/00<br>G01P15/08 |
| A | PATENT ABSTRACTS OF JAPAN<br>vol. 008, no. 286 (P-324), 27 Décembre 1984<br>& JP 59 151025 A  (SHIMAZU SEISAKUSHO KK), 29 Août 1984,<br>* abrégé *<br>--- | 1 | |
| A | DE 42 30 087 A (BEZZAOUI HOCINE DIPL ING) 10 Mars 1994<br>* colonne 3, ligne 53 - ligne 61 *<br>* figure 8 *<br>--- | 1 | |
| A | OPTICS COMMUNICATIONS,<br>vol. 110, no. 3/04, 15 Août 1994,<br>pages 410-424, XP000454981<br>JENKINS R M ET AL: "A NOVEL WAVEGUIDE MACH-ZEHNDER INTERFEROMETER BASED ON MULTIMODE INTERFERENCE PHENOMENA"<br>* chapitre 3 *<br>* figure 4 *<br>----- | 1 | **DOMAINES TECHNIQUES RECHERCHES (Int.Cl.6)**<br><br>G02B<br>G01H<br>G01P<br>G01D |

Le présent rapport a été établi pour toutes les revendications

| Lieu de la recherche | Date d'achèvement de la recherche | Examinateur |
|---|---|---|
| BERLIN | 4 Août 1997 | Luck, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

I : theorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)